# EUROPÄISCHE PATENTANMELDUNG

(11) **EP 3 623 648 A1**
(43) Veröffentlichungstag der Anmeldung: **18.03.2020**
(21) Anmeldenummer: 18194611.2
(22) Anmeldetag: 14.09.2018
(51) Int. Cl.: F16B 7/04, F16B 7/22, F16B 2/04, F16B 2/10

(54) **VERBINDUNGSVORRICHTUNG ZUR VERBINDUNG VON PROFILEN**

(71) Anmelder: Vieler International GmbH + Co. KG, 58642 Iserlohn (DE)
(72) Erfinder: Tschap, Martin, 58644 Iserlohn (DE)
(74) Vertreter: Patentanwälte Dörner & Kötter PartG mbB

(57) **Zusammenfassung**

Die Erfindung betrifft eine Verbindungsvorrichtung zur lösbaren Verbindung von zwei Profilen (8, 9), von denen das erste Profil (8) einen Aufnahmeraum (83) für das Gehäuse der Verbindungsvorrichtung und das zweite Profil (9) eine hinterschnittene Nut (91) aufweist, wobei das Gehäuse der Verbindungsvorrichtung zwei gegenüberliegend angeordnete Stirnseiten aufweist, die über zwei parallel zueinander angeordnete Seitenteile (1) miteinander verbunden sind, wobei das Gehäuse ein Antriebsmodul aufnimmt, über das wenigstens ein Hebel (3) in Längsrichtung des Gehäuses bewegbar ist, an dem ein aus einer ersten Stirnseite hinausragendes Hakenelement (33) zur Anordnung in einer hinterschnittenen Nut (91) angeformt ist, das in jeder Position des Hebels (3) in Längsrichtung des Gehäuses aus der ersten Stirnseite herausragt, wobei an der ersten Stirnseite die beiden Seitenteile verbindend beabstandet zueinander zwei Achsen (21) angeordnet sind, zwischen denen der wenigstens eine Hebel (3) geführt ist, wobei der wenigstens eine Hebel (3) eine erste Steuerkulisse (34) aufweist, in die eine der beiden Achsen (21) eingreift, wodurch eine Kulissenführung gebildet ist.

## Beschreibung

Die Erfindung betrifft eine Verbindungsvorrichtung zur lösbaren Verbindung von zwei Profilen, von denen das erste Profil einen Aufnahmeraum für das Gehäuse der Verbindungsvorrichtung und das zweite Profil eine hinterschnittene Nut aufweist, wobei das Gehäuse der Verbindungsvorrichtung zwei gegenüberliegend angeordnete Stirnseiten aufweist, die über zwei parallel zueinander angeordnete Seitenteile miteinander verbunden sind, wobei das Gehäuse ein Antriebsmodul aufnimmt, über das wenigstens ein Hebel in Längsrichtung des Gehäuses bewegbar ist, an dem ein aus einer ersten Stirnseite hinausragendes Hakenelement zur Anordnung in einer hinterschnittenen Nut angeformt ist, das in jeder Position des Hebels in Längsrichtung des Gehäuses aus der ersten Stirnseite herausragt.

Derartige Verbindungsvorrichtungen, wie sie beispielsweise aus der EP 3 048 311 A1 bekannt sind, dienen dem Verbinden von zwei oder mehr Profilelementen miteinander, beispielsweise zum schnellen Auf- und Abbau von Messebauten. Hierzu wird die Verbindungsvorrichtung in ein erstes Profilelement eingesteckt, welches hierzu einen Aufnahmeraum für das Gehäuse der Verbindungsvorrichtung aufweist. Anschließend wird ein zweites Profil mit einer hinterschnittenen Längsnut auf die aus dem Gehäuse der Verbindungsvorrichtung stirnseitig vorstehenden Hakenelemente aufgesteckt. Durch anschließendes Betätigen des Antriebsmoduls werden die Hakenelemente in eine Klemmstellung bewegt, in der sie die hinterschnittene Längsnut von hinten umklammern. Die beiden Profilelemente sind auf diese Weise sicher miteinander verbunden. Das Antriebsmodul ist hierbei durch einen Innenmehrkantbolzen gebildet, an die ein Exzenterprofil angeformt ist, über das durch Drehung des Innenmehrkantbolzens über ein passendes Werkzeug ein als Blattfederelement ausgebildeter Hebel in Längsrichtung bewegt wird. In diesem Blattfederelement ist eine polygonale Auswölbung eingebracht, die entlang eines Steges geführt ist. Durch eine Längsverschiebung des Hebels gleitet diese Auswölbung entlang des Steges, wodurch eine vertikale Bewegung des endseitigen Hakenelements erzielt ist.

Nachteilig an Verbindungsvorrichtungen der vorbekannten Art ist, dass die als Blattfederelemente ausgebildeten Hebel durch starken Anzug durch das Antriebsmodul zur Verbindung zweier Profile überdehnt werden kann, wodurch dessen Vorspannung, die zur Führung der polygonalen Auswölbung entlang des Steges erforderlich ist, beeinträchtigt werden kann. Zudem können sich die durch das federnde Material hergestellten Hakenelemente bei starker Beanspruchung verziehen, was zur Beeinträchtigung der Profilverbindung führen kann.

Hier will die Erfindung Abhilfe schaffen. Der Erfindung liegt die Aufgabe zugrunde, eine Verbindungsvorrichtung zur lösbaren Verbindung von zwei Profilen bereitzustellen, bei der eine Beeinträchtigung der mit Hakenelementen versehenen Hebel durch starke Beanspruchung vermieden ist. Gemäß der Erfindung wird diese Aufgabe durch die Merkmale des kennzeichnenden Teils des Patentanspruchs 1 gelöst.

Mit der Erfindung ist eine Verbindungsvorrichtung zur lösbaren Verbindung von zwei Profilen bereitgestellt, bei der eine Verformung der mit Hakenelementen versehenen Hebel durch starke Beanspruchung vermieden ist. Dadurch, dass an der ersten Stirnseite die beiden Seitenteile verbindend beabstandet zueinander zwei Achsen angeordnet sind, zwischen denen der wenigstens eine Hebel geführt ist, wobei der wenigstens eine Hebel eine erste Steuerkulisse aufweist, in die wenigstens eine der beiden Achsen eingreift, wodurch eine Kulissenführung gebildet ist, ist eine geführte vertikale Bewegung des Hakens des wenigstens einen Hebels bei Längsverschiebung des Hebels durch das Antriebsmodul bewirkt, ohne dass es einer Federvorspannung bedarf. Zudem ist durch die Führung mittels zweier Achsen ein Verbiegen oder Abknicken des Hakenelements des wenigstens einen Hebels verhindert.

In Ausgestaltung der Erfindung weist das Hakenelement des wenigstens einen Hebels zwei in einem spitzen Winkel zueinander angestellte Anlageflächen auf. Hierdurch ist das Hakenelement sowohl an der Hinterschnittkante, als auch an der vorderen Nutkante wirksam, da die Anlageflächen unter Erzeugung einer Vorspannung an diese angepresst werden, wodurch eine Verbesserung der Verbindung bei Belastung in Richtung der hinterschnittenen Nut erzielt ist. Ein Abrutschen des Hakenelements ist so wirksam verhindert. Bevorzugt beträgt der spitze Winkel zwischen 45 Grad und 75 Grad, besonders bevorzugt zwischen 50 Grad und 65 Grad.

In Weiterbildung der Erfindung ist wenigstens ein Hebelpaar angeordnet, das zwei Hebel umfasst, die endseitig gegenseitig ausgerichtete Hakenelemente aufweisen, wobei die durch die Steuerkulissen der Hebel gebildete Kulissenführung bei einer durch das Antriebsmodul initiierten Längsbewegung der Hebel des wenigstens einen Hebelpaares eine gleichgerichtete Längsbewegung und zugleich eine entgegengerichtete Querbewegung der gegenseitig ausgerichteten Hakenelemente bewirkt. Hierdurch ist ein gegenläufiges Verkrallen der Hakenelemente in die hinterschnittene Nut des zweiten Profils bewirkt, wodurch eine zuverlässige Verbindung gewährleistet ist.

In Ausgestaltung der Erfindung sind die beiden Hebel eines Hebelpaares gleitend aneinanderliegend angeordnet. Hierdurch ist eine zusätzliche Führung der einzelnen Hebel erzielt.

In weiterer Ausgestaltung der Erfindung sind die Hakenelemente des wenigstens einen Hebelpaares derart ausgebildet, dass sie bei maximaler Austrittsposition aus dem Gehäuse das jeweils gegenüberliegende Hakenelement überdecken. Hierdurch ist einer Verletzungsgefahr entgegengewirkt.

In Weiterbildung der Erfindung sind zwei Hebelpaare angeordnet, die an jeweils einer einem Seitenteil zugewandten Seite entlang diesem Seitenteil verlaufen, wobei bevorzugt zwischen den Hebelpaaren ein Zwischenstück angeordnet ist, durch das die beiden Achsen geführt sind. Hierdurch ist eine gleichmäßige, zweiseitige Aufbringung einer Klemmkraft auf das zu verbindende zweite Profil erzielt. Durch das Zwischenstück ist eine zusätzliche Führung der beiden Hebelpaare bewirkt. Besonders bevorzugt weist das Zwischenstück an der ersten Stirnseite eine plane Stirnfläche auf.

In Ausgestaltung der Erfindung umfasst das Antriebsmodul eine Antriebsachse, die in zwei gegenüberliegend in den Seitenteilen des Gehäuses eingebrachten Langlöchern verschiebbar gelagert ist und die mit den Hebeln des wenigstens einen Hebelpaares verbunden ist. Hierdurch ist eine gleichmäßige Übertragung der durch das Antriebsmodul eingeleiteten Kraft auf die mit der Antriebsachse verbundenen Hebel erzielt.

In Weiterbildung der Erfindung umfasst das Antriebsmodul einen Bedienhebel, der um eine zwischen den Seitenteilen verlaufende und diese bevorzugt verbindende Schwenkachse schwenkbar gelagert ist und der derart mit der Antriebsachse verbunden ist, dass durch Verschwenken des Bedienhebels eine Verschiebung der Antriebsachse entlang der gegenüberliegend angeordneten Langlöcher bewirkt ist. Hierdurch ist eine werkzeuglose Bedienung des Antriebsmoduls erzielt.

In Ausgestaltung der Erfindung weist der Bedienhebel eine zweite Steuerkulisse auf, in der die Antriebsachse geführt ist. Hierdurch ist eine gezielte Transformation der Schwenkbewegung des Bedienhebels in eine translatorische Bewegung der Antriebsachse bewirkt.

In weiterer Ausgestaltung der Erfindung weist der Bedienhebel an seiner der Schwenkachse zugewandten Seite eine Anformung auf, die in Öffnungsstellung des Bedienhebels vollständig in dem Gehäuse angeordnet ist und in Verschließstellung des Bedienhebels auf der dem Bedienhebel gegenüberliegenden Seite über die Unterseite der Seitenteile hervorragt, wobei der Anformung gegenüberliegend wenigstens ein die Oberseite der Seitenteile überragender Vorsprung zum Eingriff in eine Ausnehmung des ersten Profils angeordnet ist. Hierdurch ist eine Anhebung der Verbindungsvorrichtung innerhalb des Aufnahmeraums des ersten Profils bei Verschwenken des Bedienhebels in die Verschließstellung erzielt, wodurch der wenigstens eine Vorsprung in eine Ausnehmung des ersten Profils einbringbar ist, der eine Verklemmung der Vorrichtung innerhalb des ersten Profils bewirkt. Bevorzugt ist die Unterseite der Seitenteile zu deren Oberseite nach hinten in Richtung der Schwenkachse um einen Winkel geneigt, sodass sich am hinteren Ende eine Reduzierung der Breite der Seitenteile ergibt. Dabei entspricht der Betrag der Reduzierung der Breite besonders bevorzugt dem Betrag des Überstands der Anformung über die Unterseite der Seitenteile in Verschließstellung des Bedienhebels.

In Weiterbildung der Erfindung weist der Bedienhebel an seinem der Schwenkachse entgegengesetzten Ende einen verbreiterten Abschnitt auf. Hierdurch ist die Bedienung des Bedienhebels verbessert.

In Ausgestaltung der Erfindung weist der Bedienhebel an seinem der zweiten Stirnseite zugewandten Ende einen Anschlag auf, der in einer definierten Schwenkposition an einem Begrenzungselement anliegt, wobei das Begrenzungselement vorzugsweise durch eine die Seitenteile verbindende Anschlagachse gebildet ist. Hierdurch ist eine Begrenzung des Schwenkwinkels des Bedienhebels und damit eine Begrenzung der maximalen Bewegung der mit der Antriebsachse verbundenen Hebel erzielt.

In weiterer Ausgestaltung der Erfindung ist wenigstens ein Widerlagerblech fest angeordnet, das mit den Langlöchern der Seitenteile fluchtend mit einem Langloch versehen ist, in dem die Antriebsachse geführt ist. Hierdurch ist eine seitliche Führung des Bedienhebels erzielt. Bevorzugt ist zusätzlich die Anschlagsachse und/oder die Schwenkachse durch das wenigstens eine Widerlagerblech geführt, wodurch diese zusätzlich abgestützt ist.

In weiterer Ausgestaltung der Erfindung ist an wenigstens einem Widerlagerblech ein die Oberseite der Seitenteile überragender Vorsprung zum Eingriff in eine Ausnehmung des ersten Profils angeformt. Hierdurch übernimmt das Widerlagerblech zugleich die Funktion der Verklemmung der Verbindungsvorrichtung innerhalb des Aufnahmeraums des ersten Profils bei Positionierung des Bedienhebels in Verschließstellung.

In Weiterbildung der Erfindung ist an dem Bedienhebel ein elastischer Schlegel angeordnet, der derart ausgebildet ist, dass er sich in geöffneter Schwenkstellung des Bedienhebels vorgespannt an der Antriebsachse abstützt und sich beim Verbringen des Bedienhebels in die Verschließstellung von der Antriebsachse entfernt, wodurch der Schlegel entspannt wird. Hierdurch ist ein akustisches Signal erzielt, welches das Erreichen der Verschließstellung des Bedienhebels anzeigt. Anstelle des vorgespannten Schlegels kann beispielsweise auch ein reversibel verformbares Blech oder auch ein Ratschenelement angeordnet sein, dass derart angeordnet ist, dass bei Erreichen der Verschließstellung des Bedienhebels ein akustisches Signal erzeugt wird.

In Ausgestaltung der Erfindung ist der elastische Schlegel an ein Griffstück angeformt, das auf dem Bedienhebel aufgebracht ist. Hierdurch ist zugleich die Haptik des Bedienhebels verbessert.

In weiterer Ausgestaltung der Erfindung ist an den Längsseitenwänden über die erste Stirnseite herausragend eine Anschlagbegrenzung angeformt, die bevorzugt in Form einer seitlich nach außen abgewinkelten Nase ausgebildet ist. Hierdurch ist eine optimale Positionierung der Verbindungvorrichtung in den Aufnahmeraum des ersten Profils erzielt. Vorteilhaft ist die Nase derart ausgebildet, dass sie die an den Hebeln angeordneten Hakenelemente in geöffneter Position des Bedienhebels überdecken.

Andere Weiterbildungen und Ausgestaltungen der Erfindung sind in den übrigen Unteransprüchen angegeben. Ein Ausführungsbeispiel der Erfindung ist in den Zeichnungen dargestellt wird nachfolgend im Einzelnen beschrieben. Es zeigen:

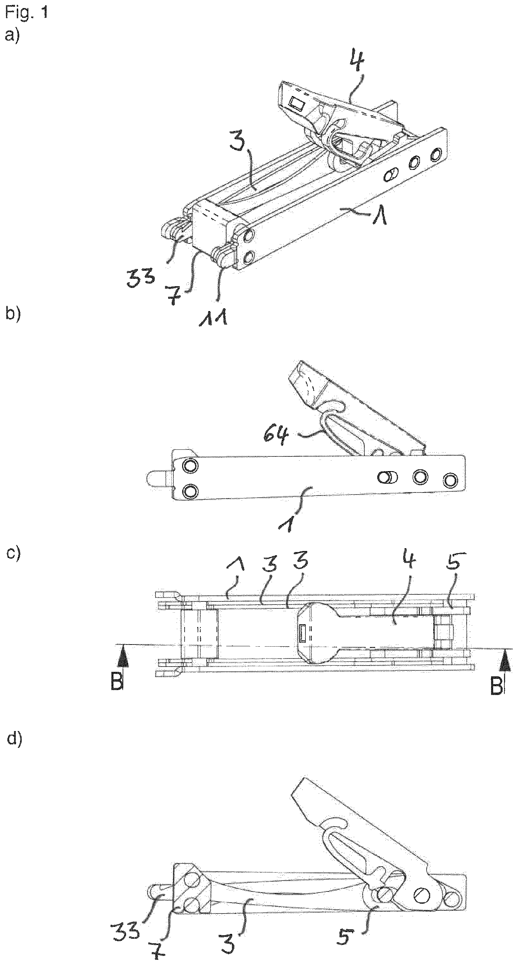

- Figur 1: die schematische Darstellung einer Verbindungsvorrichtung mit Bedienhebel in entriegelter Position
a) in räumlicher Darstellung;
b) in der Seitenansicht;
c) in der Draufsicht;
d) im Längsschnitt B-B;

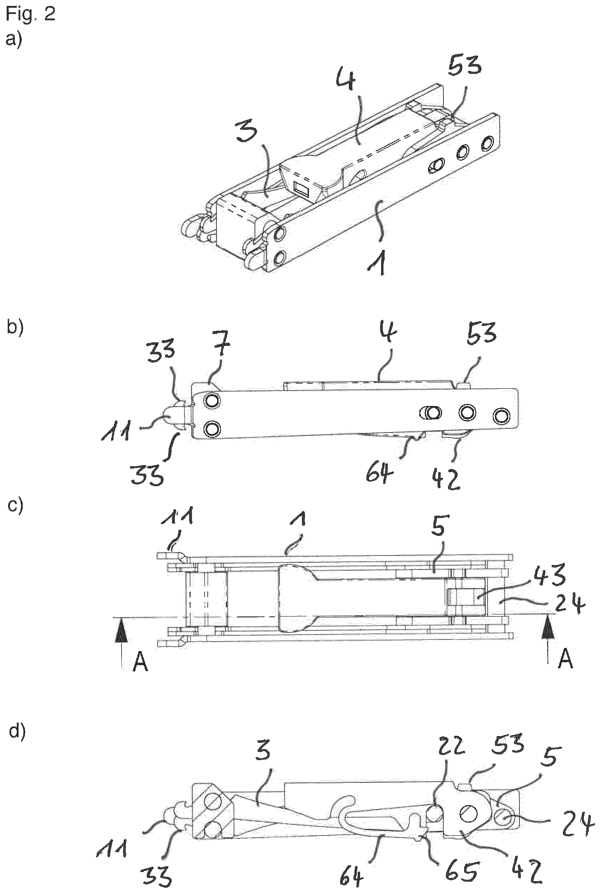

- Figur 2: die schematische Darstellung der Verbindungsvorrichtung aus Figur 1 mit Bedienhebel in Verschließstellung
a) in räumlicher Darstellung;
b) in der Seitenansicht;
c) in der Draufsicht;
d) im Längsschnitt A-A;
- Figur 3: die Verbindungsvorrichtung aus Figur 1 in Explosionsdarstellung;
- Figur 4: die schematische Darstellung einer mit einer Verbindungsvorrichtung gemäß Figur 1 erzielten Verbindung von zwei Profilen;
- Figur 5: der Verbindungsauschnitt der Verbindung aus Figur 4 in der Draufsicht;
- Figur 6: die Darstellung einer Profilverbindung gemäß Figur 4
a) mit Verbindungsvorrichtung in entriegelter Stellung (Profile positioniert, aber nicht verbunden);
b) mit Verbindungsvorrichtung in verriegelter Stellung (Profile sind miteinander verbunden);
- Figur 7: die schematische Darstellung des Aufnahmeraums des ersten Profils der Profilanordnung aus Figur 4;
- Figur 8: die schematische Detaildarstellung der Hakenelemente eines Hebelpaares der Verbindungsvorrichtung in der Profilverbindung gemäß Figur 6 b).

Die als Ausführungsbeispiel gewählte Verbindungsvorrichtung umfasst zwei parallel zueinander angeordnete Seitenteile 1, die an ihrer ersten, vorderen Stirnseite über zwei vertikal zueinander beabstandeten Führungsachsen 21 und an ihrer zweiten, hinteren Stirnseite über eine Schwenkachse 23 und einer beabstandet hinter dieser angeordneten Anschlagachse 24 miteinander verbunden sind, und an denen jeweils zwei ein Hebelpaar ausbildende Hebel 3 anliegen, die mit einer zwischen den Seitenwänden 1 angeordneten und über einen auf der Schwenkachse 23 schwenkbar gelagerten Bedienhebel 4 verschiebbaren Antriebsachse 22 verbunden und zwischen den Führungsachsen 21 geführt sind. Zwischen den Hebelpaaren und dem Bedienhebel 4 ist jeweils ein Widerlagerblech 5 angeordnet, wobei die beiden Widerlagerbleche 5 von der Antriebsachse 22, der Schwenkachse 23 sowie der Anschlagachse 24 durchdrungen sind. Zwischen den aus den Hebeln 3 gebildeten beiden Hebelpaaren ist auf den Führungsachsen 21 ein Zwischenstück 7 angeordnet.

Die Seitenteile 1 sind im Ausführungsbeispiel als spiegelbildliche Stanzbiegeblechteile ausgeführt und im Wesentlichen rechteckig ausgebildet, wobei deren Unterseite zur Oberseite in Richtung zur Anschlagachse 24 um 1,5 Grad geneigt ist, wodurch eine Reduzierung der Breite der Seitenteile 1, die im Ausführungsbeispiel eine Länge von 80 mm aufweisen, um 2 mm bewirkt ist. An ihrer ersten, vorderen Stirnseite ist an jedes Seitenteil 1 eine winklig angestellte Nase 11 angeformt, die als Einschubbegrenzung dient. Beabstandet zu der Nase 11 sind in jedes Seitenteil zwei vertikal beabstandete Bohrungen 12 zur Aufnahme der Führungsachsen 21 eingebracht. An der gegenüberliegenden, zweiten Stirnseite sind weiterhin zwei horizontal beabstandet angeordnete Bohrungen 12 zur Aufnahme der Schwenkachse 23 sowie der Anschlagachse 24 eingebracht. Diesen beiden Bohrungen 12 vorgelagert ist weiterhin ein horizontal verlaufendes Langloch 13 zur horizontalen Führung der Antriebsachse 22 angeordnet. Die beiden spiegelbildlich ausgebildeten Seitenteile 1 sind derart gegenüberliegend positioniert, dass Ihre Nasen 11 jeweils nach außen angewinkelt angestellt sind.

Die Hebel 3 sind im Ausführungsbeispiel als identische Stanzblechteile ausgeführt und weisen an ihrem der zweiten, hinteren Stirnseite zugewandten Ende ein Langloch 21 zum Durchtritt der Schwenkachse 23 auf. Beabstandet zu dem Langloch 31 ist weiterhin eine Bohrung 32 zur Durchführung der Antriebsachse 22 eingebracht. An ihrem dem Langloch 31 gegenüberliegenden Ende ist an den Hebeln 3 ein Hakenelement 33 angeformt. Das Hakenelement 33 weist eine erste Anschlagfläche 331 und eine zweite Anschlagfläche 332 auf, die im Ausführungsbeispiel in einem Winkel von 60 Grad zueinander angestellt sind. Dem Hakenelement 33 vorgelagert ist in die Hebel 3 eine Steuerkulisse 34 zum Eingriff einer Führungsachse 21 eingeformt. Die jeweils ein Hebelpaar ausbildenden Hebel 3 sind um 180 Grad um ihre Längsachse verschwenkt zueinander angeordnet, so dass die an die Hebel 3 eines Hebelpaares angeformten Hakenelemente 33 in entgegengesetzte Richtungen zeigen. Dabei wirken die entgegengesetzten Seiten der Steuerkulisse 34 der beiden Hebel 3 mit den Führungsachsen 21 zusammen, sodass bei einer Längsbewegung der beiden Hebel 3 eines Hebelpaares diese über ihre Steuerkulissen 34 vertikal in entgegengesetzte Richtungen bewegt werden.

Der Bedienhebel 4 ist im Ausführungsbeispiel als Stanzblechteil ausgebildet und weist an seinem der ersten, vorderen Stirnseite zugewandten Ende einen schmalen Steg 41 zur Aufnahme eines Griffstücks 6 auf. An seinem dem Steg 41 gegenüberliegenden Ende ist an den Bedienhebel 4 eine Anformung 42 angeformt, die derart ausgebildet ist, dass sie in Verschließstellung des Bedienhebels 4 über die Unterseite der Seitenteile 1 hervorragt. Im Ausführungsbeispiel ist die Anformung 42 derart dimensioniert, dass sie entsprechend der durch die winklige Anstellung der Unterseite der Seitenteile 1 reduzierten Breite um einen Betrag von 2 mm über die Unterseite hervorragt. Beabstandet zur Anformung 42 ist weiterhin eine Nocke 43 an den Bedienhebel 4 zum Anschlag an die Anschlagachse 24 angeformt. Beabstandet zur Anformung 42 ist in den Bedienhebel 4 eine Bohrung 44 zur Aufnahme der Schwenkachse 23 eingebracht. Der Bohrung 44 vorgelagert ist in den Bedienhebel 4 eine zweite Steuerkulisse 45 in Form eines Schlitzes eingebracht, der im Ausführungsbeispiel geradlinig ausgebildet ist. Der Bedienhebel 4 ist auf der Schwenkachse 43 schwenkbar gelagert, wobei die in den Langlöchern 13 der Seitenteile 1 verschiebbar gelagerte Antriebsachse 22 von der Steuerkulisse 45 aufgenommen ist.

Auf dem Bedienhebel 4 ist ein Griffstück 6 aufgeschoben, das im Ausführungsbeispiel als Kunststoffspritzgussteil ausgebildet ist und das an seinem der Bohrung 44 des Bedienhebels 4 gegenüberliegenden Ende verbreitert ausgeführt ist. Dabei weist das Griffstück 6 eine im Wesentlichen quaderförmige Aufnahme 61 zum Einschub des Steges 41 des Bedienhebels 4 auf. An seinem der Aufnahme 61 gegenüberliegenden Ende sind an dem Griffstück 6 zwei parallel zueinander angeordnete Flügel 62 angeformt, die jeweils mit einer Bohrung 63 versehen sind, die mit der Bohrung 44 des Bedienhebels 4 fluchten und durch die die Schwenkachse 23 geführt ist. Zwischen den Flügeln 62 und der Aufnahme 61 ist an das Griffstück 6 an seiner Unterseite ein elastischer Schlegel 64 angeformt, der an seinem freien Ende eine kehlförmige Anlagekontur 65 zur Anlage an der Antriebsachse 22 aufweist. Die Anlagekontur 65 ist dabei derart ausgebildet, dass durch eine Schwenkbewegung des Griffstücks 6 der Schlegel 64 solange über die Anlagekontur 65 an der Antriebsachse 22 anliegt, bis eine definierte Vorspannung aufgebaut ist, wonach der Schlegel 64 von der Antriebsachse 22 heruntergleitet, wodurch der Schlegel 64 entspannt wird. Liegt die Verbindungsvorrichtung auf dem Boden eines Aufnahmeraums eines Profils auf, so schlägt der Schlegel 64 hierdurch geräuschvoll auf diesem Boden auf.

Die Widerlagerbleche 5 sind im Ausführungsbeispiel als Stanzblechteile ausgebildet und weisen ein Langloch 51 zur Durchführung der Antriebsachse 22 sowie beabstandet zu diesen zwei Bohrungen 52 zur Durchführung der Schwenkachse 23 sowie der Anschlagachse 24 auf. An ihrer dem Bedienhebel 4 zugewandten Oberseite ist an die Widerlagerbleche 5 jeweils ein Vorsprung 53 angeformt, der über die Oberseite der Seitenteile 1 hervorragt.

Das Zwischenstück 7 ist in Form eines Aluminiumsblocks ausgebildet, der an seiner der vorderen Stirnseite zugewandten Seite mit einer ebenen, orthogonal zur Oberseite der Seitenteile 1 angestellten Fläche versehen ist. Das Zwischenstück 7 weist eine Bohrung 71 zur Durchführung der oberen Führungsachse 21 sowie beabstandet zu dieser eine bogenförmige Ausnehmung 72 zur Aufnahme der unteren Führungsachse 21 auf.

Durch die Ausgestaltung nahezu sämtlicher Bauteile der Verbindungsvorrichtung als Stanzblechteile ist eine kostengünstige Herstellung ermöglicht. Dies wird durch die im Wesentlichen identische Ausführung der Seitenteile 1, Hebel 3, Achsen 21, 22, 23, 24 und Widerlagerbleche 5 weiter unterstützt, wobei zugleich durch die hierdurch erzielte Reduzierung der Bauteilvielfalt der Lagerhaltungsaufwand minimiert ist. Durch bedarfsgerechte Dimensionierung der (identisch ausgeführten) Hebel 3 ist eine einfache Anpassung der Verbindungsvorrichtung an unterschiedlichen Profilwandstärken ermöglicht.

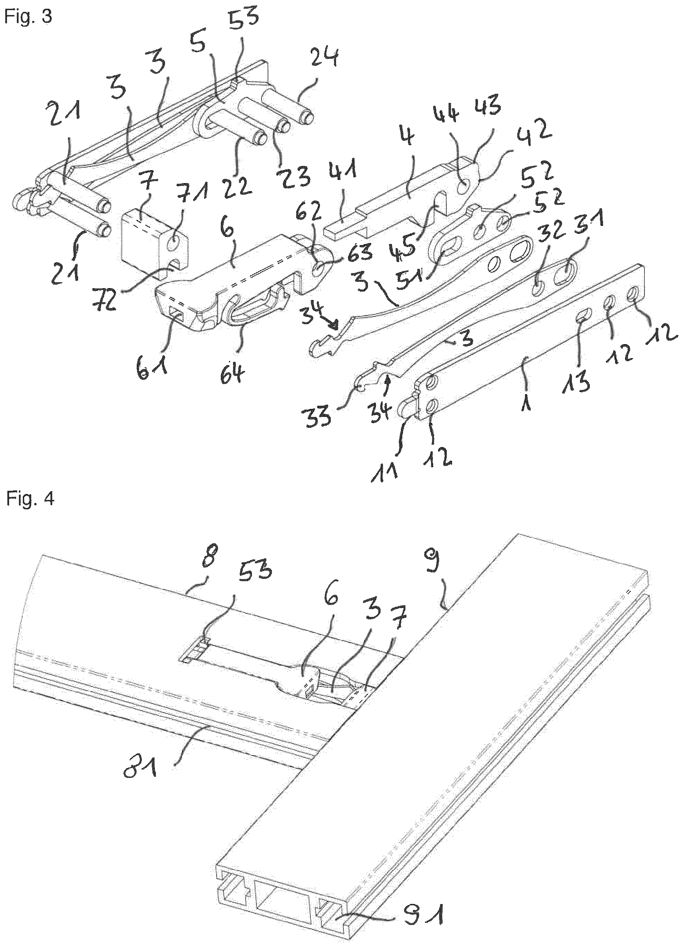

In den Figuren 4 bis 6 ist eine Verbindung eines ersten Profils 8 mit einem zweiten Profil 9 dargestellt. Die Profile 8, 9 sind als Hohlprofile ausgebildet, die drei nebeneinander angeordnete, im Wesentlichen quaderförmig ausgebildete, Hohlkammern aufweisen. Die beiden äußeren Hohlkammern sind mit einem seitlichem Schlitz versehen, wodurch hinterschnittene Systemnuten 81, 91 gebildet sind. An dem mit dem zweiten Profil 9 zu verbindenden Ende des ersten Profils 8 ist in eine Deckseite der mittleren Hohlkammer, ein Zargenfenster 82 eingebracht, wodurch ein Aufnahmeraum 83 für die Verbindungsvorrichtung gebildet ist. Das Zargenfenster 82 ist im Wesentlichen in Form eines rechteckigen Einschnitts ausgebildet, deren Seitenkanten im vorderen Bereich gegenüberliegend mit einer Einwölbung 84 versehen sind. Endseitig weist das Zargenfenster 82 zwei gegenüberliegende Ausnehmungen auf, wodurch Hinterschnitte 85 gebildet sind.

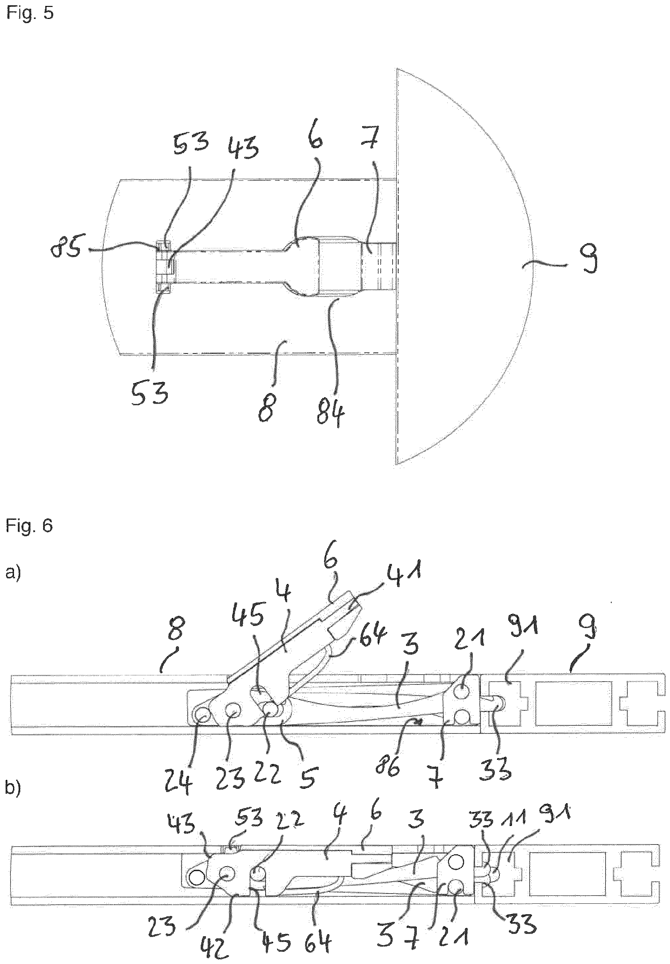

Zur Montage der Verbindungsvorrichtung wird diese in eine entriegelte Position verbracht, wobei der Bedienhebel 4 soweit zurückgeschwenkt ist, dass die Nocke 43 auf der Anschlagachse 34 anliegt. In dieser Stellung sind die Hebel 3 maximal ausgefahren, wobei deren Hakenelemente 33 sich gegenseitig überdeckend in gleicher Höhe mit den Nasen 11 der Seitenteile 1 positioniert sind. Der Schlegel 64 des Griffstücks 6 liegt mit seiner Anlagekontur 65 auf der Antriebsachse 22 auf. In dieser entriegelten Stellung wird die Verbindungsvorrichtung in den Aufnahmeraum 83 des ersten Profils 8 eingeschoben, bis die nach außen winklig angestellten Nasen 11 des Seitenteils 1 an den Seitenwänden des Aufnahmeraums 83 anliegen. Der Aufnahmeraum ist in dieser Position durch das Zwischenstück 7 verschlossen. Das so mit der Verbindungsvorrichtung versehene erste Profil 8 wird an das zweite Profil 9 seitlich angestellt, sodass die Nasen 11 der Seitenteile 1 sowie die zwischen diesen angeordneten Hakenelemente 33 der Hebel 3 in die Systemnut 91 des zweiten Profils 9 hineinragen (vgl. Figur 6a).

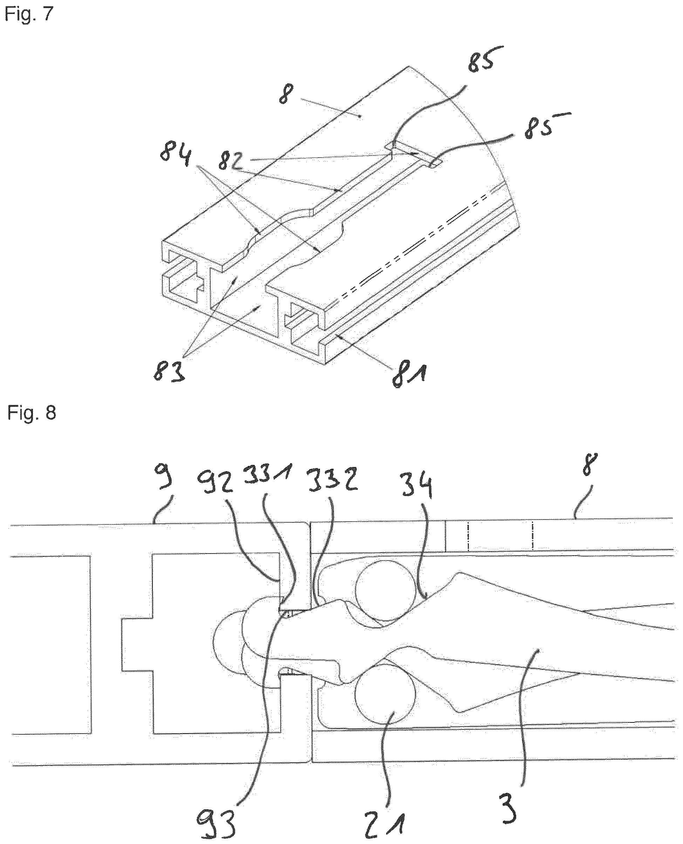

Zur Verbindung des ersten Profils 8 mit dem zweiten Profil 9 wird nun der Bedienhebel 4 in die Verriegelungsstellung verschwenkt, in der der Bedienhebel 4 in das Zargenfenster 82 des ersten Profils 8 eintaucht, bis dessen Oberfläche im Wesentlichen bündig mit der Oberfläche des ersten Profils 8 ist. Durch das Verschwenken des Bedienhebels 4 wird die Antriebsachse 22 entlang der Steuerkulisse 45 bewegt, wodurch die mit der Antriebsachse 22 verbundenen Hebel 3 in Richtung der Anschlagachse 24 nach hinten bewegt werden. Hierbei folgen die Hebel 3 mit ihrer Steuerkulisse 34 den in diese eingreifenden Führungsachsen 21, wodurch die Hakenelemente 33 eines jeden Hebelpaares vertikal in entgegengesetzte Richtungen nach außen bewegt werden, sodass sie gegenüberliegend die Hinterschnitte der Systemnut 91 des zweiten Profils 9 hintergreifen. Durch die Zurückbewegung der Hebel 3 wird das zweite Profil 9 an das erste Profil 8 gepresst. Dabei werden die Hakenelemente 33 gegen die Systemnut 91 gezogen, wobei die erste Anlagefläche 331 der Hakenelemente 33 gegen die Hinterschnittkante 92 und die in einem spitzen Winkel zu dieser angestellte zweite Anlagefläche 332 gegen die Nutkante 93 der Systemnut 91 gepresst werden. Hierdurch werden die Hinterschnittkante 92 und die Nutkante 93 der Profilnut 91 sowie auch die Anlageflächen 331, 332 der Hakenelemente elastisch verformt, wodurch eine Einspannung der Systemnut durch die Hakenelemente bewirkt ist. Die Anstellung der Anschlagflächen 331, 332 der Hakenelemente 33 an die Systemnut 91 des zweiten Profils 9 ist schematisch in Figur 8 gezeigt.

Zugleich wird im Zuge der Schwenkbewegung des Bedienhebels 4 die Anformung 42 entlang des Bodens 86 des Aufnahmeraums 83 bewegt, wodurch die Verbindungsvorrichtung im Bereich der Schwenkachse 23 in Richtung des Zargenfensters 82 angehoben wird. Hierdurch werden die Vorsprünge 53 der Widerlagerbleche 5 in die durch die Ausnehmungen gebildeten Hinterschnitte 85 des Zargenfensters 82 bewegt, wodurch die Verbindungsvorrichtung mit dem ersten Profil 8 verankert ist.

Während des Herabschwenkens des Bedienhebels 4 wird weiterhin der Schlegel 64 über die Anlagekontur 65 gegen die Antriebsachse 22 gepresst, wodurch dieser vorgespannt wird. Bei Erreichen der Endstellung des Bedienhebels 4 gleitet die Anlagekontur 65 des Schlegels 64 durch die aufgebaute Vorspannung von der Antriebsachse und schlägt unter hörbarer Geräuschentwicklung auf dem Boden 86 des Aufnahmeraums 83 des ersten Profils 8 auf. Hierdurch ist eine vollständige Verriegelung der Verbindungsvorrichtung akustisch angezeigt. Die beiden Profile 8, 9 sind nun zuverlässig verbunden (vgl. Figur 6b).

Wie insbesondere in Figur 5 ersichtlich liegt der verbreiterte Endabschnitt des Griffstücks 6 des Bedienhebels 4 an den Einwölbungen 84 des Zargenfensters 82 an, wobei zwischen dem Griffstück 6 und dem Zwischenstück 7 ein großzügiger Zwischenraum zum Eintauchen eines Fingers zur Entriegelung des Bedienhebels 4 gebildet ist. Ein Werkzeug zur Ver- oder Entriegelung der so ausgebildeten Verbindungsvorrichtung ist nicht erforderlich.

## Patentansprüche

1. Verbindungsvorrichtung zur lösbaren Verbindung von zwei Profilen (8, 9), von denen das erste Profil (8) einen Aufnahmeraum (83) für das Gehäuse der Verbindungsvorrichtung und das zweite Profil (9) eine hinterschnittene Nut (91) aufweist, wobei das Gehäuse der Verbindungsvorrichtung zwei gegenüberliegend angeordnete Stirnseiten aufweist, die über zwei parallel zueinander angeordnete Seitenteile (1) miteinander verbunden sind, wobei das Gehäuse ein Antriebsmodul aufnimmt, über das wenigstens ein Hebel (3) in Längsrichtung des Gehäuses bewegbar ist, an dem ein aus einer ersten Stirnseite hinausragendes Hakenelement (33) zur Anordnung in einer hinterschnittenen Nut (91) angeformt ist, das in jeder Position des Hebels (3) in Längsrichtung des Gehäuses aus der ersten Stirnseite herausragt, **dadurch gekennzeichnet, dass** an der ersten Stirnseite die beiden Seitenteile verbindend beabstandet zueinander zwei Achsen (21) angeordnet sind, zwischen denen der wenigstens eine Hebel (3) geführt ist, wobei der wenigstens eine Hebel (3) eine erste Steuerkulisse (34) aufweist, in die wenigstens eine der beiden Achsen (21) eingreift, wodurch eine Kulissenführung gebildet ist.

2. Verbindungsvorrichtung nach Anspruch 1 , **dadurch gekennzeichnet, dass** das Hakenelement (33) des wenigstens einen Hebels (3) zwei in einem spitzen Winkel zueinander angeordnete Anlageflächen aufweist.

3. Verbindungsvorrichtung nach Anspruch 1 oder 2, **dadurch gekennzeichnet, dass** wenigstens ein Hebelpaar angeordnet ist, das zwei Hebel (3) umfasst, die endseitig gegenseitig ausgerichtete Hakenelemente (33) aufweisen, wobei die durch die Steuerkulissen (34) der Hebel (3) gebildete Kulissenführung bei einer durch das Antriebsmodul initiierten Längsbewegung der Hebel (3) des wenigstens einen Hebelpaares eine gleichgerichtete Längsbewegung und zugleich eine entgegengerichtete Querbewegung der gegenseitig ausgerichteten Hakenelemente (33) bewirkt und wobei die beiden Hebel (3) eines Hebelpaares gleitend aneinanderliegend angeordnet sind.

4. Verbindungsvorrichtung nach Anspruch 3, **dadurch gekennzeichnet, dass** die Hakenelemente (33) der Hebel (3) des wenigstens einen Hebelpaares derart ausgebildet sind, dass sie bei maximaler Austrittsposition aus dem Gehäuse das jeweils gegenüberliegende Hakenelement (33) überdecken.

5. Verbindungsvorrichtung nach Anspruch 3 oder 4, **dadurch gekennzeichnet, dass** zwei Hebelpaare angeordnet sind, die an jeweils einer einem Seitenteil (1) zugewandten Seite entlang diesem Seitenteil (1) verlaufen, wobei bevorzugt zwischen den Hebelpaaren bevorzugt ein Zwischenstück (7) angeordnet ist, durch das die beiden Achsen (21) geführt sind und das besonders bevorzugt an der ersten Stirnseite eine ebene Stirnfläche aufweist.

6. Verbindungsvorrichtung nach einem der vorgenannten Ansprüche, **dadurch gekennzeichnet, dass** das Antriebsmodul eine Antriebsachse (22) umfasst, die in zwei gegenüberliegend in den Seitenteilen (1) des Gehäuses eingebrachten Langlöchern (13) verschiebbar gelagert ist und die mit den Hebeln (3) des wenigstens einen Hebelpaares verbunden ist.

7. Verbindungsvorrichtung nach Anspruch 6, **dadurch gekennzeichnet, dass** das Antriebsmodul einen Bedienhebel (4) umfasst, der um eine zwischen den Seitenteilen (1) verlaufende und diese bevorzugt verbindende Schwenkachse (23) schwenkbar gelagert ist und der derart mit der Antriebsachse (22) verbunden ist, dass durch Verschwenken des Bedienhebels (4) eine Verschiebung der Antriebsachse (22) entlang der gegenüberliegend angeordneten Langlöcher (13) bewirkt ist.

8. Verbindungsvorrichtung nach Anspruch 7, **dadurch gekennzeichnet, dass** der Bedienhebel (4) eine zweite Steuerkulisse (45) aufweist, in der die Antriebsachse (22) geführt ist.

9. Verbindungsvorrichtung nach Anspruch 7 oder 8, **dadurch gekennzeichnet, dass** der Bedienhebel (4) an seiner der Schwenkachse (23) zugewandten Seite eine Anformung (42) aufweist, die in Öffnungsstellung des Bedienhebels (4) vollständig in dem Gehäuse angeordnet ist und in Verschließstellung des Bedienhebels (4) auf der dem Bedienhebel (4) gegenüberliegenden Seite über die Unterseite der Seitenteile (1) hervorragt, wobei der Anformung (42) gegenüberliegend wenigstens ein die Oberseite der Seitenteile (1) überragender Vorsprung (53) zum Eingriff in eine Ausnehmung (85) des ersten Profils angeordnet ist.

10. Verbindungsvorrichtung nach einem der Ansprüche 7 bis 9, **dadurch gekennzeichnet, dass** der Bedienhebel (4) an seinem der Schwenkachse (23) entgegengesetzten Ende einen verbreiterten Abschnitt aufweist.

11. Verbindungsvorrichtung nach einem der Ansprüche 7 bis 10, **dadurch gekennzeichnet, dass** der Bedienhebel (4) an seinem der zweiten Stirnseite zugewandten Ende einen Anschlag (43) aufweist, der in einer definierten Schwenkposition an einem Begrenzungselement anliegt, wobei das Begrenzungselement vorzugsweise durch eine die Seitenteile (1) verbindende Anschlagachse (24) gebildet ist.

12. Verbindungsvorrichtung nach einem der Ansprüche 7 bis 11, **dadurch gekennzeichnet, dass** wenigstens ein Widerlagerblech (5) fest angeordnet ist, das mit den Langlöchern (13) der Seitenteile (1) fluchtend mit einem Langloch (51) versehen ist, in dem die Antriebsachse (22) geführt ist.

13. Verbindungsvorrichtung nach Anspruch 12, **dadurch gekennzeichnet, dass** an wenigsten einem Widerlagerblech (5) ein die Oberseite der Seitenteile (1) überragender Vorsprung (53) zum Eingriff in eine Ausnehmung (85) des ersten Profils (8) angeformt ist.

14. Verbindungsvorrichtung nach einem der Ansprüche 7 bis 13, **dadurch gekennzeichnet, dass** an dem Bedienhebel (4) ein elastischer Schlegel (64) angeordnet ist, der derart ausgebildet ist, dass er sich in geöffneter Schwenkstellung des Bedienhebels (4) vorgespannt an der Antriebsachse (22) abstützt und sich beim Verbringen des Bedienhebels (4) in die Verschließstellung von der Antriebsachse (22) entfernt, wodurch der Schlegel (64) entspannt wird, wobei der elastische Schlegel (64) bevorzugt an ein Griffstück (6) angeformt ist, das auf den Bedienhebel (4) aufgebracht ist.

15. Verbindungsvorrichtung nach einem der vorgenannten Ansprüche, **dadurch gekennzeichnet, dass** an den Seitenteilen (1) über die erste Stirnseite herausragend eine Anschlagbegrenzung angeformt ist, die bevorzugt in Form einer seitlich nach außen abgewinkelten Nase (11) ausgebildet ist.
